# EUROPEAN PATENT APPLICATION

(11) **EP 4 675 429 A1**
(43) Date of publication of application: **07.01.2026**
(21) Application number: 24186224.2
(22) Date of filing: 03.07.2024
(51) Int. Cl.: G06F 9/50

(54) **SIMULTANEOUS HYBRID EXECUTION**

(71) Applicant: Aleph Alpha GmbH, 69115 Heidelberg (DE)
(72) Inventor: WEINBACH, Samuel, 69123 Heidelberg (DE); KLEIN, Markus, 69123 Heidelberg (DE)
(74) Representative: Bardehle Pagenberg Partnerschaft mbB Patentanwälte Rechtsanwälte

(57) **Abstract**

The invention relates to a computer-implemented method for managing execution of a task on a trained machine learning model configured on one or more compute instances in a distributed computing network. The invention also relates to an apparatus comprising means for carrying out the method and a computer program comprising instructions which, when executed by a processor, cause the processor to perform the method. The method comprises obtaining task-specific information about the task, including data sensitivity information of the task and task complexity information, obtaining one or more compute instance characteristics associated with each of the one or more compute instances, the compute instance characteristics including a data sensitivity capability and a task complexity capability of the compute instance, selecting a compute instance of the one or more compute instances for executing the task based on the task-specific information about the task and on the one or more compute instance characteristics, and executing at least part of the task on the selected compute instance.

## Description

### TECHNICAL FIELD

The present invention relates to a computer-implemented method, an apparatus and a computer program for managing executing of an artificial intelligence task of a client on one or more compute instances in a distributed computing network.

### BACKGROUND

Recent developments in the field of artificial intelligence, particularly in large language models (LLMs), have underscored the importance of optimizing the execution of these models. Initially, the primary focus was on enhancing the efficiency of training these models. However, with the surge in the popularity of LLM applications, optimizing the efficiency of inference has become increasingly critical. LLM inference involves the execution of a trained machine learning model, utilizing a combination of workers and schedulers with various scheduling and allocation schemes to optimize computational efficiency.

Established prior art in this domain includes techniques for balancing load to optimize inference latency, maximizing compute redundancy, and improving data center utilization across geographically distributed locations. One well-known optimization method is Round-Robin Allocation, which assigns queries to workers in a cyclic order without considering sequence lengths. Although simple to implement, this method can lead to load imbalance as it does not prioritize tasks based on their computational demand.

Another recognized approach is workload-aware allocation, which groups queries with similar sequence lengths into micro-batches to enhance efficiency and resource utilization. This method addresses the shortcomings of Round-Robin Allocation by ensuring that tasks of similar computational demands are processed together.

Additionally, iteration-level scheduling dynamically replaces completed sequences in a batch with new ones to maintain consistent batch sizes across iterations, thereby improving the utilization of computational resources. Sequence scheduling groups queries based on the LLM's ability to perceive and predict response lengths, minimizing redundant computations and further optimizing resource use.

While these optimization approaches enhance the efficiency of LLM inference, they do not consider data-specific limitations and properties. Therefore, there is a need for an optimization approach that improves the efficiency of LLM inference while taking into account data-specific constraints.

### SUMMARY OF THE INVENTION

The objective of the present invention is to provide a computer-implemented method for managing executing of an artificial intelligence task of a client on one or more compute instances in a distributed computing network and the computer-implemented method according to any one of the proceeding claims, which overcome one or more of the above-mentioned problems of the prior art.

A first aspect of the invention provides a computer-implemented method for managing execution of a task via a trained machine learning model configured on one or more compute instances in a distributed computing network. The method comprising obtaining task-specific information about the task, including data sensitivity information of the task and task complexity information obtaining one or more compute instance characteristics associated with each of the one or more compute instances, the compute instance characteristics including a data sensitivity capability and a task complexity capability of the compute instance selecting a compute instance of the one or more compute instances for executing the task based on the task-specific information about the task and on the one or more compute instance characteristics; and executing at least part of the task on the selected compute instance.

The above allows to select a desired compute instance while considering the characteristics of the compute instance and the task. This way efficient execution of the task is possible while data specific limitations and properties are considered.

In a first implementation of the method according to the first aspect, the data sensitivity information of the task includes one or more of a confidentiality information, sensitivity information and/or regulatory information.

By selecting the compute instance based on the above, it is made sure that efficient execution of the task is possible while regulations are adhered.

In a further implementation of the method according to the first aspect, the data sensitivity information of the task is associated with a client and/or the task.

In a further implementation of the method according to the first aspect, the task complexity information includes an estimate of a duration for executing the task.

In a further implementation of the method according to the first aspect, the data sensitivity capability including one or more of a geographical location of the one or more compute instance, ownership and/or host information of the one or more compute instances, a regulatory information associated with the one or more compute instances, data agreement information associated with the client and/or the one or more compute instances.

In a further implementation of the method according to the first aspect, the step of selecting the one or more compute instances is performed by an API-scheduler, preferably using Postgres SQL.

In a further implementation of the method according to the first aspect, the task complexity capability indicates a capability of executing a task with a first complexity, with a second complexity, or with a third complexity, wherein the second complexity is larger than the first complexity and smaller than the third complexity.

In a further implementation of the method according to the first aspect, the task complexity capability indicates that the one or more compute instances are optimized for executing a task with a first complexity, with a second complexity, or with a third complexity, wherein the second complexity is larger than the first complexity and smaller than the third complexity.

In a further implementation of the method according to the first aspect, the task complexity information indicates that a complexity of the task is a first complexity, a second complexity, or a third complexity, wherein the second complexity is larger than the first complexity and smaller than the third complexity.

In a further implementation of the method according to the first aspect, the one or more compute instances host the weights of the task.

In a further implementation of the method according to the first aspect, selecting the one or more compute instances comprises weighting the data sensitivity capabilities of the one or more compute instances with a respective first factor and the task complexity capabilities of the one or more compute instances with a respective second factor, and selecting the one or more compute instances based on the weighted one or more compute instance characteristics of the respective one or more compute instances, wherein the first factor of the respective one or more compute instances is preferably weighted higher than the second factor of the respective one or more compute instances.

In a further implementation of the method according to the first aspect, the task is associated with a large language model, LLM.

In a further implementation of the method according to the first aspect, the method further comprises dividing the task into one or more parts, wherein each part of the task is associated with a respective data sensitivity information of the part of the task and a respective task complexity information of the part of the task.

A further aspect of the invention refers to an apparatus comprising means configured to execute the method of the first aspect or one of the implementations of the first aspect.

A further aspect of the invention refers to a computer program comprising instructions that cause a processor, upon execution, to perform the method of the first aspect or one of the implementations of the first aspect.

A further aspect of the invention refers to a computer-readable storage medium storing program code, the program code comprising instructions that when executed by a processor carry out the method of the first aspect or one of the implementations of the first aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a block diagram illustrating a method in accordance with an embodiment of the present invention,
- FIG. 2: is a diagram illustrating a method in accordance with a further embodiment of the present invention.

### DETAILED DESCRIPTION OF EMBODIMENTS

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

The present invention relates to a computer-implemented method for managing execution of a task via a trained machine learning model configured on one or more compute instances 130 in a distributed computing network 140. Preferably, a client 110, such as a human user or a technical/machine client, initiates execution of the task via the trained machine learning model.

The task may be any task that is performed based on a trained machine learning model. Executing the trained machine learning model is also referred to as inference. Preferably, the one or more compute instances 130 host the weights of the trained machine learning model 141. The one or more compute instances 130 are part of the distributed network 140 and may comprise one or more CPUs and/or one or more GPUs for executing the task. The one or more compute instances 130 may further comprise means for communicating.

In preferred embodiments, the task is a large language model, LLM, associated task. For example, the task may be a request directed to a chatbot configured to interact with the client. Large tasks, such as the LLM may be divided into multiple instances of smaller tasks depending on their specific requirements that form the large task. For example, parts of the task that comprise confidential data may be grouped into a first part of tasks, and parts of the task that do not comprise confidential data may be grouped into a second group of tasks. This allows to parallelize execution of the task on multiple compute instances 130. The parallelization of tasks may also be referred to as "*hybrid execution*"*.* Hybrid execution is an approach where parts of an AI application or model are executed using different technologies or environments depending on their specific requirements.

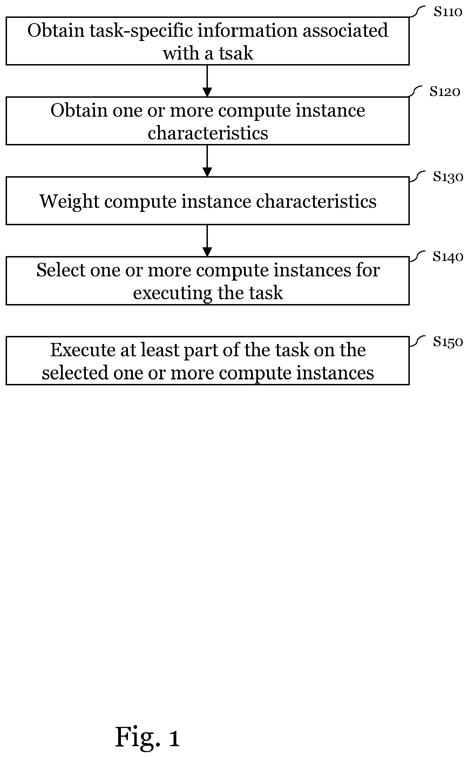

Figure 1 illustrates a block diagram of a method for managing execution of the task in accordance with an embodiment of the present invention. Preferably, one or more of the steps of Fig. 1 are executed by the management tool. The management tool may be an API-scheduler, preferably using PostgresSQL.

In a first step S110, task-specific information associated with the task are obtained.

The task specific information includes data sensitivity information of the task and task complexity information.

The data sensitivity information may be provided by the task-specific information about the task. For example, the data sensitivity information may be provided by a sensitivity tag included in the task-specific information about the task. Additionally or alternatively, data sensitivity information may be assigned via an algorithm or decision logic, e.g., via a classifier to the task-specific information about the task. For example, the classifier may determine that sensitive information/data is included in the task-specific information about the task and assign data sensitivity information to the task-specific information about the task. The data sensitivity information may be a class of data sensitivity indicating that the task-specific information comprises sensitive data and/or a degree/level of sensitivity of the task-specific information. The data sensitivity information may be part of a prompt or part of an expected response to the prompt.

The data sensitivity information indicates how sensitive the task and/or the data handled during/for execution of the task is. Data handling relates to one or more of processing data, (temporarily) storing data or distributing data. In particular, the data sensitivity information indicates how imperative it is to keep the task and/or the data handled during/for execution of the task secret. The data sensitivity information of the task may be associated with the client 110 and/or the task. The data sensitivity information may indicate that the task includes proprietary data. This may also be referred to as confidentiality information. Additionally, or alternatively, the data sensitivity information may indicate that the task includes personal information associated with a person, or a legal body (also referred to as personally identifiable information, PII). This may also be referred to as sensitivity information. Additionally, or alternatively, the data sensitivity information may indicate that the task includes data that is regulatory relevant. Regulatory relevant data may be data that has to be kept secret due to regulatory provisions. For example, according to EU's General Data Protection Regulation, GDPR, personal information associated with European citizens has to be specifically protected within the EU. This may also be referred to as regulatory information. Additionally, or alternatively, the data sensitivity information may also include data agreement information indicating that an agreement regarding the handling of the data/execution of the task is defined. For example, the client may have met an agreement with the provider of the one or more compute instances 130 that the data is handled/the task is executed only on specific predefined compute instances 130.

A level of confidentiality may be assigned to the task confidentiality information (this information may be included in the task confidentiality information or may be obtained based on the task complexity information). In preferred embodiments, the level of confidentiality is one of a predefined, finite number of levels. For example, in a particular example, the task confidentiality information may indicate that the confidentiality of the task is a first confidentiality, a second confidentiality, or a third confidentiality, wherein the second confidentiality is higher than the first confidentiality and lower than the third confidentiality. A higher confidentiality means that is more important to keep the information secret, while a lower confidentiality means that it is not as crucial to keep the information secret. Assigning the task one of the finite number of levels allows to facilitate management of the execution of the task. For example, one or more compute instances 130 may be configured to execute tasks without violating the confidentiality of the task/data.

The task complexity information indicates the complexity of executing the task. In particular, with regards to the computational complexity of the task. The computational complexity of the task may include an estimated duration of executing the task. Additionally, or alternatively, the computational complexity of the task may include an estimate of a required number of one or more compute instances 130 for executing the task. Additionally, or alternatively, the computational complexity of the task may include an estimate on necessary hardware configurations of one or more compute instances 130 needed to execute the task. Additionally, or alternatively, the computational complexity of the task may include a cost estimate of executing the task. The cost may be associated with one or more of the estimate on necessary hardware configurations of the compute instances 130, the estimate of the required number of one or more compute instances 130, and/or the estimated duration of executing the task on the one or more compute instances 130.

Additionally, or alternatively, a level of complexity of executing the task may be assigned to the task complexity information (this information may be included in the task complexity information or may be obtained based on the task complexity information). In preferred embodiments, the level of complexity is one of a predefined, finite number of levels. For example, in a particular example, the task complexity information may indicate that the complexity of the task is a first complexity, a second complexity, or a third complexity, wherein the second complexity is larger than the first complexity and smaller than the third complexity. Assigning the task one of the finite number of levels allows to optimize execution of the task. For example, one or more compute instances 130 may be configured to optimally execute tasks with corresponding complexities.

In addition to obtaining the task specific information, in step S120, one or more compute instance characteristics associated with each of the one or more compute instances. The compute instance characteristics including a data sensitivity capability and a task complexity capability of each one of the one or more compute instances 130.

The data sensitivity capability of the one or more compute instances indicates the capability of each of the respective one or more compute instances to execute a task with a certain data sensitivity information. That is, it may indicate the capability of the one or more compute instances 130 to maintain a certain degree (level) of confidentiality, preferably a level of confidentiality indicated by the data sensitivity information.

The data sensitivity capability may include information related to a configuration of the one or more compute instances 130. For example, the one or more compute instances 130 may comprise configurations for improving the data security of data handled by the compute instances 130. The information related to the configuration of the one or more compute instances 130 may further/alternatively include information related to access right configurations for accessing the tasks executed/data handled by the compute instances 130. Additionally, or alternatively, the information related to the configuration of the one or more compute instances 130 may include information related to the usage of tasks/data handled by the one or more compute instances 130. For example, the information may indicate that the one or more compute instances 130 use the date for research, advertisement and/or training purposes (e.g., for improving the machine learning model).

Additionally, or alternatively, data sensitivity capability may include a geographical location of the one or more compute instance 130. The geographical location of the one or more compute instances may indicate one or more of a detailed address information of the respective compute instances 130, a ZIP-code information of the respective compute instances 130, a county information of the respective compute instances 130, and/or a country information of the respective compute instances 130. Additionally, or alternatively, the data sensitivity capability may include ownership and/or host information of the one or more compute instances. For example, the data sensitivity capability may indicate whether the owner/host of the one or more compute instances 130 is capable of providing the certain confidentiality. Additionally, or alternatively, the data sensitivity capability may include a regulatory information associated with the one or more compute instances. For example, the data sensitivity capability may indicate whether a configuration/location of the one or more compute instances 130 is in accordance with regulatory requirements. Additionally, or alternatively, the data sensitivity capability includes data agreement information associated with the client and/or the one or more compute instances 130. The data agreement information may include agreements met between the client 110 and the host/owner of the compute instances 130, or between the client 110 and the compute instances 130 regarding maintaining a certain level of confidentiality.

Additionally, or alternatively, a level indicating the capability of each of the one or more compute instances 130 to keep sensitive data/tasks secret may be assigned to the data sensitivity information (this information may be included in the data sensitivity information or may be obtained based on the data sensitivity information). In preferred embodiments, the level of data sensitivity capability is one of a predefined, finite number of levels. For example, in a particular example, the data sensitivity capability may indicate that the capability of a compute instance to execute the task/handle confidential data is a first capability, a second capability, or a third capability, wherein the second capability is larger than the first capability and smaller than the third capability. The higher the capability, the more sensitive data can be assigned to the corresponding one or more compute instances without harming the integrity/security of the data and/or without violating regulatory requirements. Assigning one or more predefined levels to the data sensitivity capability allows to allocate respective tasks having a certain level of data sensitivity information to corresponding compute instances 130 having a corresponding level of data sensitivity capability in an efficient manner.

In an embodiment, the first capability may indicate that the corresponding compute instance 130 is capable of executing tasks having the first confidentiality without harming the integrity/security of the data and/or without violating regulatory requirements. Similarly, the second capability may indicate that the corresponding compute instance 130 is capable of also executing tasks having the second confidentiality, while the third capability may indicate that the corresponding compute instance 130 is capable of also executing tasks having the third confidentiality. Even though, in this example, compute instances 130 having the third capability may be capable of executing tasks with the first confidentiality, this may not be desired. That is, providing compute instances 130 with high confidentiality is complex and expensive. It may thus be desired to allocate compute instances 130 having the same level of confidentiality capability to the corresponding tasks to use the confidentiality capabilities of the distributed network most optimally.

The task complexity capability may include one or more of a hardware information associated with the one or more compute instances. The task complexity capability may include hardware configuration information associated with the one or more compute instances 130. For example, the task complexity capability may indicate the hardware configuration of the respective one or more compute instances 130. Additionally, or alternatively, the task complexity capability may include software information associated with each of the one or more compute instances 130. The software information may indicate a software configuration of the one or more compute instances 130. Additionally, or alternatively, the task complexity capability may include capacity information of the compute instances 130. The capacity information may indicate a capacity of the respective compute instances 130 to accept new tasks. For example, the capacity (and thus also the task complexity capability) of the respective compute instance 130 may be low, while another task is currently executed on the respective compute instance 130, or already scheduled for the respective compute instance 130. Contrary, when the respective compute instance 130 is idle, the capacity (and thus also the task complexity capability) of the respective compute instance 130 may be high. The capacity information may further indicate whether maintenance of the respective compute instance 130 is scheduled or performed.

Additionally, or alternatively, a level of task complexity capability for of executing the task may be assigned to the task complexity capability. In preferred embodiments, the level of task complexity capability is one of a predefined, finite number of levels. For example, in a particular example, the task complexity capability may indicate that the complexity of the task is a first complexity, a second complexity, or a third complexity, wherein the second complexity is larger than the first complexity and smaller than the third complexity. Assigning each of the one or more compute instances 130 one of the finite number of levels allows to optimize execution of the task. That is, each of the one or more compute instances 130 may be specifically configured to optimally run a task with a data complexity level associated with the respective level of task complexity capability.

After the task specific information and the compute instance characteristics are obtained, in step S130, the compute instance characteristics may be weighted. For example, in some jurisdictions, regulatory requirements are stricter than in other jurisdictions. Accordingly, in these jurisdictions, the data sensitivity capability of the compute instance 130 may be weighted with a first factor, wherein in jurisdiction with weak regulatory requirements, the data sensitivity capability of the compute instance 130 may be weighted with a second factor, lower than the first factor. Having a factor being weighted low means that this factor is considered to a smaller amount than a factor weighted high. However, in such jurisdictions, the task complexity capability of the compute instances 130 may be weighted with a third factor, wherein the task complexity capability in the jurisdictions with stricter regulatory requirements, the task complexity capability may be weighted with a fourth factor, lower than the third factor. Additionally, or alternatively, each individual aspect of the data sensitivity capability and task complexity capability of the compute instances may be individually weighted. For examples, in jurisdictions such as EU, where the GDPR plays a large role, the geographical location of the one or more compute instances 130 may be weighted by a larger factor than a data agreement associated with the one or more compute instances 130. The same applies for any of the other compute instance characteristics associated with each of the one or more compute instances 130. This allows to optimize the selection of compute instances 130 for executing the task.

In step S140, one or more compute instances 130 are selected for executing the task. Preferably, multiple of the one or more compute instances 130 are selected for executing the task, such that the task is parallelized on the multiple compute instances 130. The one or more compute instances 130 are selected based on the task-specific information about the task and on the one or more compute instance characteristics. Preferably, based on one or more of the data sensitivity information of the task, the task complexity information, the data sensitivity capability, or the task complexity capability, or combinations thereof. More preferably, the one or more compute instances 130 are further selected based on the weighted compute instance characteristics.

In step S150 at least part of the task is executed by the one or more selected compute instances 130. If multiple compute instances are selected for executing the task, hybrid execution of the task is enabled with the benefits described above. By selecting the one or more compute instances based on the above criteria, the hybrid execution of the task is optimized for the specific requirements of the respective task. In particular, aspects/parts of the task that have a low confidentiality may be executed on one or more compute instances 130 with a low data sensitivity capability, while aspects/parts of the same tasks that have a high confidentiality may be executed on one or more compute instances with a high data sensitivity capability. This way, efficient execution of the task is possible, without harming the integrity/security of the data and/or without violating regulatory requirements.

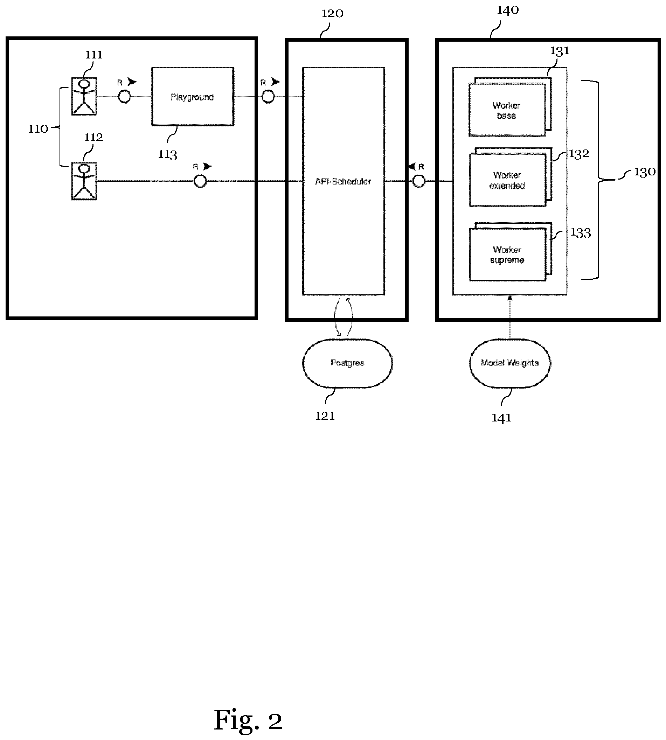

Fig. 2 shows a diagram illustrating the above method according to an exemplary embodiment. The method depicted in Fig. 2 may comprise any of the aspects described with respect to Fig. 1 above. Preferably, the steps described with respect to Fig. 1 are performed by the management tool.

In Fig. 2, a first client in and a second client 112 are shown. In this example, the first and second clients 111, 112 are users requesting execution of a task. The first client 111 requests execution of the task using a playground 113 and the second client 112 directly requests execution of the task at the management tool 120. In this context, "*playground*" typically refers to a learning or experimental environment where clients can interact with and explore various AI technologies, algorithms, models, or datasets without the constraints of a production environment or real-world consequences. From the playground, a request for executing a task associated with the playground may transmitted, for example, to a management tool 120, to manage execution of the task. In this example, the management tool is an API-Scheduler. The API-Scheduler may implement PostgreSQL 121 for managing the distributed database 140.

The distributed database 140 of this example comprises multiple compute instances divided into three levels of complexity capabilities: a worker "*base*" 131 associated with the first level, a worker "*extended*" 132 associated with a second level and a worker "*supreme*" 133 associated with the third level. The workers 131, 132, 133 host the model weights of the trained machine learning model configured to execute the task.

After receiving the requests from clients 110, the API-Scheduler obtains the task-specific information about the task and the one or more compute instance characteristics associated with each one of the one or more compute instances. In other embodiments, the API-scheduler may obtain the task-specific information about the with the requests. In even further embodiments, the API-Scheduler is provided with task-specific information about certain tasks before receiving a request to execute one of the certain tasks. Similarly, the API-scheduler may receive the one or more compute instance characteristics associated with each one of the one or more compute instances 130 after receiving the request from the clients 110 or, the API-scheduler may already have the one or more compute instance characteristics associated with each one of the one or more compute instances before the task is requested by the clients 110.

According to the method described with respect to Fig. 1, the API-scheduler selects a compute instance of the one or more compute instances for executing the task based on the task-specific information about the task and on the one or more compute instance characteristics. The selected compute instance (i.e., one or more of the workers 131, 132, 133) then executes at least a part of the task and provides an output to the API-scheduler, which in turn provides the output to the clients 110. In some other examples, the workers 131, 132, 133 directly provide the output to the clients 110.

One particular example of a task executed according to the above aspects described with reference to Figs. 1 and 2 is inference of a chatbot using the compute instances 130 of the distributed network. 140. In this example, a client situated in Europe requests interaction with the chatbot.

Preferably, the chatbot is dealing with sensitive information. In this example, the sensitive information includes personally identifiable information, PII, as well as proprietary information. Since European PII is subject to the regulatory restrictions formulated in the GDPR, the compute instances may be restricted to data storage and compute within the area of the European Union. Efficient execution of the task while maintaining the restrictions is made possible with help of the method described above.

In the example of the chatbot, this means that if the client provides sensitive information to the chatbot, the chatbot might execute the queries only on EU-based compute instances 130, while queries related to publicly available information, such as a request related to a news article, may be executed on a non-EU-based compute instance 130. For example, a user may ask the chatbot to "Provide me with the headlines of my local newspaper on my birthday, April 4th, 1980*".* The managing tool may apply hybrid execution to divide the task into multi parts. As described above, HE allows GDPR-relevant requests to be routed to compute instances 130 within the EU while non-GDPR-relevant requests may be routed to any compute instance 130 that meets the task complexity capabilities, such as latency and cost requirements. This may include compute instances 130 outside the EU.

In the above example, a first task may be formulated as "*determine the local newspaper based on the location of the user*"*,* a second task may be formulated as *"temporarily store April 4, 1980, as the birthday of the client",* and a third task may be formulated as "*determine the headlines of the local newspaper on April 4, 1980*"*.* While the first and second task comprise PII related to the client 110 (the location information and the birthday information), the third task does not require handling of PII. Information related to headlines on a certain date is publicly available. Accordingly, in this example, the first and second task may be executed by one or more compute instances 130 within the EU that are conform with GDPR regulations, while the third task may be executed by a compute instance 130 outside the EU, as no confidential data is handled for executing this task. In particular, for the first two tasks, the data sensitivity capability of the one or more compute instances may be weighted higher, relative to the task complexity capability of the respective compute instances 130, whereas for the third task, the task complexity capability of the respective compute instances 130 may be weighted higher, relative to the data sensitivity capability of the one or more compute instances 130.

The invention also relates to an apparatus comprising a processing means configured to perform/implement any of the above described with respect to Figs. 1 and 2. The processing means may be a CPU and/or a GPU. Preferably, the apparatus further comprises a storage means for storing program instructions for executing the method(s) described above. Preferably, the apparatus further comprising communication means for receiving instructions from the clients 110 and data from the workers 131, 132, 133, and for providing instructions to the workers 131, 132, 133.

Further, the invention relates to a system comprising the above apparatus and the distributed computing network 140 comprising one or more compute instances 130, and preferably one or more clients 110. The one or more compute instances 130 comprise a processor and/or a storage means and/or a communication means for communicating with the apparatus.

The invention also relates to a computer program comprising instructions which, when the program is executed by a processor, cause the processor to perform the any of the above-described steps/aspects.

## Claims

1. A computer-implemented method for managing execution of a task on a trained machine learning model configured on one or more compute instances in a distributed computing network, the method comprising:
obtaining task-specific information about the task, including data sensitivity information of the task and task complexity information;
obtaining one or more compute instance characteristics associated with each of the one or more compute instances, the compute instance characteristics including a data sensitivity capability and a task complexity capability of the compute instance;
selecting a compute instance of the one or more compute instances for executing the task based on the task-specific information about the task and on the one or more compute instance characteristics; and
executing at least part of the task on the selected compute instance.

2. The computer-implemented method according to the preceding claim, wherein the data sensitivity information of the task includes one or more of a confidentiality information, sensitivity information and/or regulatory information.

3. The computer-implemented method according to the preceding claim, wherein the data sensitivity information of the task is associated with a client and/or the task.

4. The computer-implemented method according to any one of the preceding claims, wherein the task complexity information includes an estimate of a duration for executing the task.

5. The computer-implemented method according to any one of the preceding claims, wherein the data sensitivity capability including one or more of a geographical location of the one or more compute instance, ownership and/or host information of the one or more compute instances, a regulatory information associated with the one or more compute instances, data agreement information associated with the client and/or the one or more compute instances.

6. The computer-implemented method according to any one of the proceeding claims, wherein the task complexity capability includes one or more of a hardware information associated with the one or more compute instances, hardware configuration information associated with the one or more compute instances and/or software information associated with the one or more compute instances.

7. The computer-implemented method according to any one of the preceding claims, wherein the task complexity capability indicates a capability of executing a task with a first complexity, with a second complexity, or with a third complexity, wherein the second complexity is larger than the first complexity and smaller than the third complexity.

8. The computer-implemented method according to the preceding claim, wherein the task complexity capability indicates that the one or more compute instances are optimized for executing the task with the first complexity, with the second complexity and/or with the third complexity.

9. The computer-implemented method according to any one of the preceding claims, wherein the step of selecting the one or more compute instances is performed by an API-scheduler, preferably using Postgres SQL.

10. The computer-implemented method according to any one of the preceding claims, wherein the task complexity information indicates that a complexity of the task is a first complexity, a second complexity, or a third complexity, wherein the second complexity is larger than the first complexity and smaller than the third complexity.

11. The computer-implemented method according to any one of the preceding claims, wherein the one or more compute instances host the weights of the task.

12. The computer-implemented method according to any one of the preceding claims, wherein selecting the one or more compute instances comprises:
weighting the data sensitivity capabilities of the one or more compute instances with a respective first factor and the task complexity capabilities of the one or more compute instances with a respective second factor; and
selecting the one or more compute instances based on the weighted one or more compute instance characteristics of the respective one or more compute instances, wherein the first factor of the respective one or more compute instances is preferably weighted higher than the second factor of the respective one or more compute instances.

13. The computer-implemented method according to any one of the preceding claims, further comprising:
dividing the task into one or more parts, wherein each part of the task is associated with a respective data sensitivity information of the part of the task and a respective task complexity information of the part of the task.

14. An apparatus comprising means for carrying out the method according to any one of claims 1 to 13.

15. A computer program comprising instructions which, when the program is executed by a processor, cause the processor to perform the method according to any one of claims 1 to 13.
